# FASCICULE DE BREVET EUROPEEN

(11) **EP 3 432 085 B1**
(45) Date de publication et mention de la délivrance du brevet: **15.04.2020**
(21) Numéro de dépôt: 17182437.8
(22) Date de dépôt: 20.07.2017
(51) Int. Cl.: G04B 37/10

(54) **SOUPAPE DE SÉCURITÉ POUR PIÈCE D'HORLOGERIE**
SICHERHEITSVENTIL FÜR UHR
SAFETY VALVE FOR A TIMEPIECE

(43) Date de publication de la demande: 23.01.2019
(73) Titulaire: Meco S.A., 2540 Grenchen (CH)
(72) Inventeur: BAEBLER, Jean, 3073 Gümligen (CH); OLVASZTO, Christian, 2540 Grenchen (CH)
(74) Mandataire: ICB SA

(56) Documents cités:
- EP-A1- 1 124 167
- JP-A- 2017 015 695
- US-A- 6 137 750
- US-A1- 2010 051 119
- US-B1- 6 200 020

## Description

### Domaine de l'invention

La présente invention concerne une soupape de sécurité configurée pour être intégrée dans une tête couronne d'une pièce d'horlogerie et une soupape de sécurité automatique configurée pour être vissée dans la carrure d'une pièce horlogerie. Ce type de soupape est particulièrement bien adapté pour des montres de plongée.

### Arrière-plan de l'invention

Il est connu de munir une boîte de montre d'une soupape afin de permettre soit d'insuffler un gaz dans la boite, afin de faire régner à l'intérieur de celle-ci une pression supérieure à la pression ambiante, empêchant la pénétration d'eau, de vapeur ou de poussière à l'intérieur de la boîte, soit au contraire de faire le vide à l'intérieur de celle-ci en vue de soustraire le mouvement aux effets de l'air contenu dans la boîte lors de sa fermeture.

Toutefois, ces constructions n'ont jamais été utilisées pour éliminer les effets sur la boîte de la montre lorsque celle-ci se trouve en un milieu gazeux sous forte pression pendant une longue période. En effet, on a constaté que, quelles que soient les qualités d'étanchéité des boîtes de montres réalisées jusqu'à ce jour, lorsqu'elles sont soumises pendant des durées relativement longues, de l'ordre de plusieurs heures, à des pressions relativement fortes, de l'ordre de plusieurs dizaines d'atmosphères, et spécialement lorsque l'atmosphère ambiante est faite d'un gaz à molécules de petite dimension, comme c'est le cas de l'hélium par exemple, qu'on utilise fréquemment dans les cloches de plongée, la pression à l'intérieur de la boîte finit par augmenter considérablement.

De telles conditions d'emploi se présentent, notamment lorsque la montre est utilisée à de grandes profondeurs sous-marines, au cours de travaux s'effectuant sous cloche. Au cours du retour de la montre dans une atmosphère à pression normale, et cela malgré les paliers de décompression qui sont nécessaires aux occupants de la cloche, il se produit une surpression intérieure dans la boîte de la montre, qui peut provoquer l' « éclatement» de celle-ci, c'est-à-dire l'éjection de sa glace, en particulier.

Le brevet CH682199 divulgue un exemple de soupape de sécurité pour une montre de plongée visant à résoudre notamment le problème susvisé. Néanmoins, la configuration de cette soupape à l'inconvénient d'avoir une fiabilité de durée limitée due en particulier à la perte d'élasticité des joints d'étanchéité toriques au fil du temps impactant la pression d'ouverture de la soupape.

Le document US 6,200,020 décrit une couronne avec un tube solidaire du boîtier, un capot mobile par rapport au tube et un joint à lèvres disposé entre les deux avec une lèvre élastique qui délimite un espace intérieur de la pièce d'horlogerie. La lèvre présente une forme conique et repose sur le tube avec une précontrainte. En cas de surpression au sein de l'espace intérieur, la lèvre se dégage du tube ce qui permet de compenser la différence de pression entre l'espace intérieur et l'environnement extérieur. Au contraire, en cas de surpression à l'extérieur, la lèvre est pressée plus fortement sur le tube afin de sceller l'espace intérieur par rapport à l'environnement extérieur.

### Résumé de l'invention

Un but de la présente invention est par conséquent de proposer une soupape fiable à long terme et de limiter ainsi les variations de la pression d'ouverture qui s'exerce sur les joints lors de la remontée du plongeur, tout en garantissant l'étanchéité parfaite lors de la plongée.

A cet effet, selon un premier aspect de l'invention, il est proposé une tête couronne pour pièce d'horlogerie, notamment pour montre de plongée, comportant un capot comprenant un couvercle et une jupe axiale, un tube destiné à être fixé dans un boitier de la pièce d'horlogerie, un joint d'étanchéité disposé entre le tube et la jupe axiale, et un canon central agencé pour être en prise avec le tube. Le canon central et le capot forment un ensemble apte à être placé dans différentes positions axiales par rapport au tube. La tête couronne comprend en outre une soupape de sécurité comportant un canal d'évacuation agencé pour pouvoir être en communication fluidique avec l'intérieur du boitier lorsque la soupape est dans une configuration ouverte afin d'évacuer un excès de fluide. La soupape de sécurité comporte par ailleurs un régulateur de pression agencé à l'intérieur du canal d'évacuation pour maitriser la vitesse de sortie du fluide.

Selon une forme de réalisation avantageuse, le régulateur de pression comporte une bille agencée pour coopérer avec un siège de bille. Cette bille est agencée sur le siège de bille de manière à obstruer le passage d'un fluide dans le canal d'évacuation lorsque la pression interne en amont de la bille est inférieure à une valeur prédéterminée. La bille est délogée de son siège lorsque ladite pression interne excède la valeur prédéterminée afin d'établir ladite communication fluidique.

Selon une forme de réalisation avantageuse, le siège de bille, le tube et la jupe axiale présentent une symétrie de révolution par rapport à l'axe de rotation (A) du capot. Le siège comporte une ouverture centrale correspondant à l'entrée du canal d'évacuation ainsi qu'une surface d'appui destinée à être en contact avec la bille.

Selon une forme de réalisation avantageuse, le régulateur de pression comporte en outre un piston monté à l'intérieur du canon central et un organe élastique agencé pour coopérer avec le piston. Celui-ci est configuré pour se déplacer axialement au gré des variations de pression à l'intérieur du boîtier.

Selon une forme de réalisation avantageuse, le piston et l'organe élastique forment un ensemble agencé d'une part pour pouvoir actionner le déplacement d'une tige de commande, et d'autre part, pour la régulation de la pression à l'intérieur du boitier.

Selon une forme de réalisation avantageuse, la tête couronne comporte en outre des moyens de blocage empêchant la désolidarisation entre le capot et le tube. Ces moyens de blocage peuvent être sous la forme d'une bague de guidage agencée à une extrémité du tube au moins partiellement sur sa circonférence, la bague de guidage comportant une surface d'appui agencée pour venir exercer une pression sur le joint d'étanchéité. Selon une variante d'exécution, les moyens de blocage peuvent être sous la forme d'un épaulement agencé sur la paroi interne du tube et comportant une surface d'appui contre laquelle une partie du piston peut venir en butée et sous la forme d'un rebord prévu à la base du canon central et agencé pour venir en butée contre un épaulement prévu sur le piston.

La soupape comporte une tête de soupape, un tube destiné à être fixé dans un boitier de la pièce d'horlogerie, et un canal d'évacuation agencé pour pouvoir être en communication fluidique avec l'intérieur du boitier lorsque la soupape de sécurité est dans une configuration ouverte afin d'évacuer un excès de fluide. La soupape de sécurité comporte en outre un régulateur de pression agencé à l'intérieur du canal d'évacuation pour maitriser la vitesse de sortie du fluide.

Le régulateur de pression comporte une bille agencée pour coopérer avec un siège de bille. La bille est agencée sur le siège de manière à obstruer le passage d'un fluide dans le canal d'évacuation lorsque la pression interne en amont de la bille est inférieure à une valeur prédéterminée. La bille est délogée de son siège lorsque ladite pression interne excède la valeur prédéterminée afin d'établir ladite communication fluidique.

Le siège ainsi que le tube présentent une symétrie de révolution par rapport à un axe de référence (A). Le siège comporte une ouverture centrale correspondant à l'entrée du canal d'évacuation ainsi qu'une surface d'appui destinée à être en contact avec la bille.

Le régulateur de pression comporte en outre un piston monté à l'intérieur du tube et un organe élastique agencé pour coopérer avec le piston. Celui-ci est configuré pour se déplacer axialement au gré des variations de pression à l'intérieur du boîtier.

La paroi externe du tube comporte une partie filetée destinée à être vissée dans la carrure du boitier.

La soupape comporte en outre une bague de maintien comprenant une paroi latérale externe en appui contre la circonférence de la paroi interne du tube. La bague de maintien repose sur le siège de bille assurant le centrage de la bille par rapport à un axe de référence (A).

Ladite soupape comporte en outre un joint d'étanchéité à lèvre incorporé dans la tête de soupape. La lèvre d'étanchéité est en appui contre la paroi interne du tube lorsque la pression en aval de la bille est inférieure à une valeur prédéterminée. La lèvre d'étanchéité est configurée pour fléchir dans une direction essentiellement perpendiculaire à la paroi interne du tube lorsque la pression en aval de la bille excède la valeur prédéterminée afin de permettre l'évacuation du fluide hors de la soupape.

Il est aussi proposé une pièce d'horlogerie, notamment une montre de plongée, comportant au moins la tête couronne de réglage selon l'invention.

### Description sommaire des dessins

D'autres caractéristiques et avantage de la présente invention apparaîtrons à la lecture de plusieurs formes de réalisation données uniquement à titre d'exemples non limitatifs et faites en référence aux dessins annexés dans lesquels :
- la figure 1 représente une vue en demi-coupe d'une tête couronne de réglage dans une position vissée avec soupape de sécurité dans une configuration fermée selon une première forme de réalisation ;
- la figure 2 représente une vue similaire à la figure 1 avec la tête couronne de réglage dans une position dévissée et la soupape de sécurité dans une configuration ouverte ;
- les figures 3a, 3b et 3c sont chacune identique à la figure 2, et dans lesquelles est représenté schématiquement la progression d'un fluide, par exemple de l'hélium, dans le canal d'évacuation ;
- la figure 4 représente une vue en demi-coupe d'une tête couronne de réglage dans une position vissée selon une autre forme de réalisation avec soupape de sécurité dans une configuration fermée ;
- la figure 5 représente une vue similaire à la figure 4 avec la tête couronne de réglage dans une position dévissée et la soupape de sécurité dans une configuration ouverte ;
- les figures 6a, 6b et 6c sont chacune identique à la figure 5, et dans lesquelles est représenté schématiquement la progression du fluide dans le canal d'évacuation ;
- la figure 7 représente une vue en demi-coupe d'une soupape de sécurité automatique selon une forme de réalisation dans une configuration fermée ; et
- les figures 8a, 8b et 8c représentent chacune la soupape de la figure 7 dans une configuration ouverte, et dans lesquelles est représentée schématiquement la progression du fluide dans le canal d'évacuation.

### Description détaillée de modes de réalisation préférés

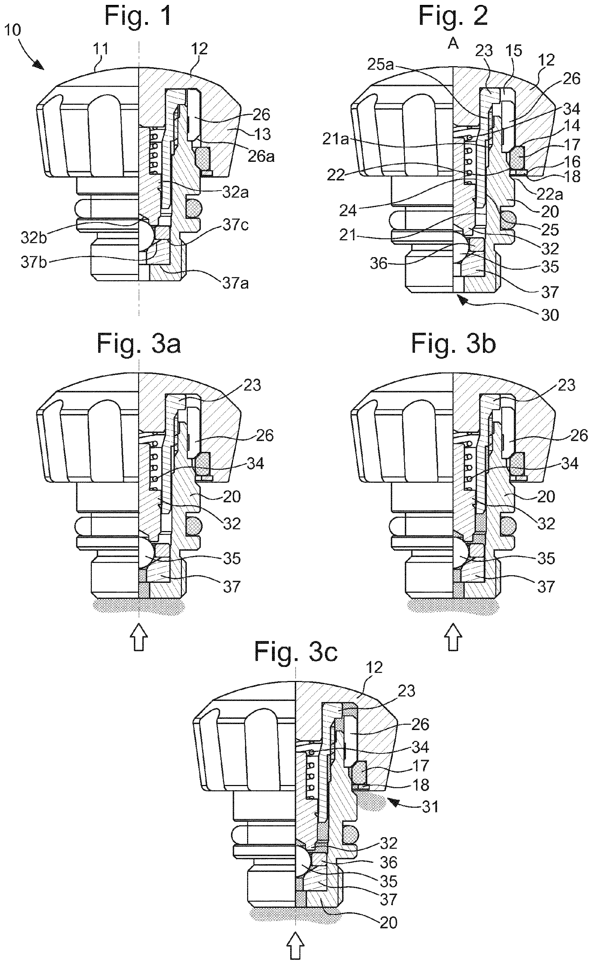

Une tête couronne de réglage 10 notamment pour montre de plongée selon une première forme de réalisation de l'invention va maintenant être décrite en référence aux figures 1 à 3c.

La tête couronne 10 comporte un tube 20 destiné à être fixé sur un boitier de montre (non représentée) par vissage ou chassage dans la carrure du boitier. Le tube 20 comporte une partie taraudée 21a disposée sur sa paroi interne 21 ainsi qu'un renflement 22a disposé le long de la circonférence de sa paroi externe 22. La tête couronne 10 comporte également un capot 11, lequel comprend un couvercle 12 et une jupe axiale 13 présentant une symétrie de révolution autour de l'axe de rotation A du capot 11. Le couvercle 12 et la jupe axiale 13 du capot 11 définissent une cavité 15 dans le capot 11. La tête couronne 10 comporte en outre un canon central 23 agencé dans la cavité 15 du capot 11 et solidaire à celui-ci. Le canon central 23 comporte sur sa paroi externe 25 une partie filetée 25a vissée dans la partie taraudée 21a du tube 20.

La tête couronne de réglage 10 comporte par ailleurs un joint d'étanchéité 17 interposé entre la jupe axiale 13 du capot 11 et le tube 20 de manière à garantir l'étanchéité de la tête couronne indépendamment du fait que le capot 11 se trouve dans une première position axiale dans laquelle la tête couronne est vissée ou dans une seconde position axiale dans laquelle la tête couronne est dévissée. Dans cette forme de réalisation, ce joint d'étanchéité 17 est un joint torique. Ce joint 17 est agencé entre en épaulement circulaire 14 réalisé dans la jupe axiale 13 et une bague de maintien 18 de forme annulaire. Cette bague 18 est fixée, par exemple par chassage, dans une rainure 16 de forme correspondante se trouvant vers la base de la jupe axiale 13 en regard du tube 20.

La tête couronne 10 comporte en outre une bague de guidage 26 solidaire de l'extrémité du tube 20 et disposée dans la cavité 15 contre une partie de la jupe axiale 13. La bague de guidage 26 est de préférence enchâssée sur l'extrémité du tube 20 mais peut également être collée ou fixée de toute autre manière sur le tube 20. Cette bague 26 comporte une surface d'appui 26a apte à exercer une pression sur le joint d'étanchéité 17.

En référence à la figure 1, le joint d'étanchéité 17 est surcompressé par le renflement 22a du tube 20 de telle sorte que les propriétés d'étanchéité soient les meilleures possibles lorsque le capot 11 se trouve dans la première position axiale dans laquelle la tête couronne 10 est dans une configuration dite vissée. Selon la figure 2, le joint d'étanchéité 17 est comprimé entre la bague de maintien 18 d'une part et la bague de guidage 26 d'autre part de telle sorte que les propriétés d'étanchéité de la tête couronne 10 soient également les meilleures possibles lorsque le capot 11 se trouve dans la seconde position axiale dans laquelle la tête couronne 10 est dans une configuration dite dévissée. Pour ce faire, la surface d'appui 26a est de préférence oblique par rapport à l'axe de rotation A du capot 11. En d'autres termes, la bague de guidage 26 est taillée en biseau.

Cette bague 26 permet aussi d'éviter que le capot 11 se désolidarise du tube 20 par un dévissement excessif puisque le joint d'étanchéité 17 fait également office de butée dès que le capot 11 a atteint la seconde position axiale correspondant à la configuration dévissée de la tête couronne .

La tête couronne de réglage 10 comporte également un piston 32 logé dans une ouverture centrale du canon central 23 ainsi qu'un organe élastique, par exemple un ressort de compression 34 du type hélicoïdal, dans une cavité définie par l'ensemble capot-canon d'une part et par le piston 32 d'autre part. Le ressort 34 est compressé axialement entre le couvercle 12 du capot 11 et un épaulement 32a du piston 32 et il permet notamment d'éloigner le capot 11 de l'épaulement du piston 32. Le piston 32 relie cinématiquement le capot 11 à une tige de commande (non représentée) du mouvement horloger logé dans la boite de montre. Cette tige de commande permet au porteur d'effectuer différentes commandes en fonction de la position axiale du capot 11 par rapport au tube 20, par exemple le remontage de la montre lorsque le capot 11 se trouve dans une première position axiale tel qu'illustré par la figure 1, ou certaines corrections, comme celle de l'heure, lorsque le capot 11 se trouve dans une seconde position axiale tel qu'illustré pat la figure 2.

Le piston 32 et le ressort 34 sont également impliqués dans la régulation de la pression à l'intérieur du boitier de montre grâce à une soupape de sécurité dont une description détaillée est donnée ci-dessous.

Le piston et le ressort forment donc un ensemble qui a l'avantage d'être impliqué dans la réalisation de deux fonctions principales qui sont indépendantes l'une de l'autre, à savoir : l'activation de la tige de commande pour effectuer différents réglages d'une part, et la régulation de la pression à l'intérieur du boitier de montre d'autre part.

Afin de moins solliciter les joints d'étanchéité de la tête couronne, et de mieux réguler les variations de pression à l'intérieur du boitier de montre occasionnées par exemple par la remontée du plongeur à la surface, une soupape de sécurité est intégrée à la tête couronne.

La soupape de sécurité selon une forme de réalisation comporte un canal d'évacuation agencé pour pouvoir être en communication fluidique avec l'intérieur du boitier de montre lorsque la soupape est dans une configuration ouverte afin d'évacuer un excès de pression dans le boitier. Cette soupape comporte un outre un régulateur de pression agencé à l'intérieur du canal d'évacuation pour maitriser la vitesse de sortie d'un fluide qui se présente sous la forme d'un gaz, de préférence de l'hélium. Le régulateur de pression comporte à cet effet une bille 35 coopérant avec un siège de bille 37.

Le siège de bille 37, le tube 20 et la jupe axiale 13 présentent une symétrie de révolution par rapport à l'axe de rotation A du capot 11. La bille et son siège peuvent par exemple être à base de métal, de céramique ou de matériaux thermoplastiques entre autre.

Le siège 37 comporte une base annulaire 37a comportant une ouverture dont l'axe de révolution coïncide avec l'axe de rotation A du capot 11. Le diamètre de cette ouverture est inférieur au diamètre de la bille 35. Cette ouverture correspond à l'entrée 30 du canal d'évacuation de la soupape. Le siège 37 comporte également une surface d'appui 37b inclinée et circulaire destinée à être en contact avec la bille 35 ainsi qu'une surface d'appui périphérique 37c. Une bague de maintien 36 comprenant une paroi latérale externe en appui contre la circonférence de la paroi interne 21 du tube 20 repose sur la surface d'appui périphérique 37c du siège 37 afin d'encercler la bille 35 pour en assurer le centrage par rapport à l'axe de rotation A du capot 11.

La bille 35 est agencée sur son siège 37 de manière à obstruer le passage du gaz dans le canal d'évacuation lorsque la pression dans le boitier de montre, en amont de la bille, est inférieure une valeur prédéterminée. Cette valeur peut être adaptée aux circonstances, cette adaptation étant réalisée par le choix du ressort de compression 34 qui maintient une extrémité du piston 32 en appui contre la bille 35. Les propriétés du ressort 34 sont donc choisies pour gérer la contrainte qu'exerce le piston 32 sur la bille 35 afin de contrôler la pression d'ouverture de la soupape.

L'extrémité du piston 32 possède un évidement 32b s'apparentant essentiellement à un cône de sorte à former, avec le siège 37 et la bague de maintien 36, une cage délimitant un espace dans lequel la bille 35 peut se déplacer sous l'effet de la pression du gaz. On notera à cet effet que la bille est toujours sous la contrainte du ressort 34 lorsque la tête couronne 10 est dans une configuration vissée (figure 1) alors que le ressort 34 est ajusté pour que la bille 35 soit libre ou légèrement sous contrainte lorsque la tête couronne 10 est dans une configuration dévissée (figure 2).

En référence aux figures 3a, 3b, et 3c, la tête couronne 10 est dans une configuration dévissée alors que la pression à l'intérieur du boitier de montre excède un seuil critique. Sous l'effet de cette pression excessive, la bille 35 est délogée de son siège 37 ce qui permet au gaz d'accéder à l'entrée 30 du canal d'évacuation (figure 3a), puis de se déplacer le long de ce canal (figure 3b) jusqu'à la sortie 31 du canal (figure 3c) afin de permettre l'évacuation du gaz hors de la soupape.

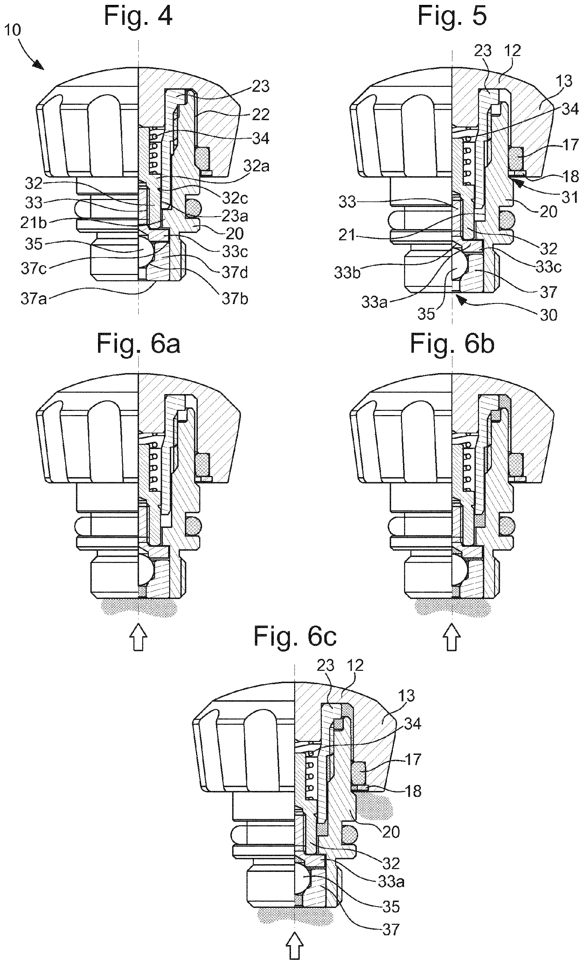

Une tête couronne de réglage 10 pour montre de plongée selon une deuxième forme de réalisation va maintenant être décrite en référence aux figures 4 à 6c. Le principe de fonctionnement de la tête couronne selon cette forme de réalisation est identique à celle qui vient d'être décrite. Aussi, pour des raisons essentiellement de concision et de clarté, seules les différences structurelles vont être décrites ci-après.

Selon les figures 4 et 5, qui illustrent la tête couronne de réglage dans une configuration vissée, respectivement dévissée, le régulateur de pression comporte un piston 32 contenant un taraudage dans lequel une vis de guidage 33 est vissée. La tête 33a de la vis de guidage est disposée en regard de la bille 35 et comporte une partie centrale évidée 33b en forme de cône ainsi qu'une partie annulaire périphérique 33c qui s'étend jusqu'à la paroi interne 21 du tube 20. Le siège de bille 37 comporte une base annulaire 37a, une surface d'appui 37b circulaire et inclinée, une paroi cylindrique 37d afin d'assurer le centrage de la bille 35 par rapport à l'axe de rotation A du capot 11 et une surface d'appui périphérique 37c disposée en regard de la partie annulaire périphérique 33c de la tête 33a de la vis de guidage 33. La configuration et le positionnement de ces différents éléments permet de former également une cage délimitant un espace dans lequel la bille peut se déplacer sous l'effet de la pression.

En lieu et place de la bague de guidage selon la première forme de réalisation, la paroi interne 21 du tube 20 comporte un épaulement 21b. La partie annulaire périphérique 33c de la tête 33a de la vis de guidage 33 est agencée pour venir en butée contre cet épaulement lorsque le capot 11 est amené dans sa seconde position axiale. En outre, il est prévu un rebord 23a à la base du canon central 23 agencé pour venir en butée contre la face inférieure de l'épaulement 32a du piston 32 et s'engager dans une encoche 32c prévue à cet effet sous la face inférieure de l'épaulement 32a du piston 32. Ainsi, lorsque la tête couronne 10 est dévissée, le canon central 23 sera bloqué par l'épaulement 32a du piston 32, qui lui-même sera bloqué, étant solidaire de la vis de guidage 33 elle-même bloquée par l'épaulement 21b du tube 20. Ceci permet d'éviter un dévissement excessif de la tête couronne 10 de façon à empêcher que le capot 11 se désolidarise du tube 20.

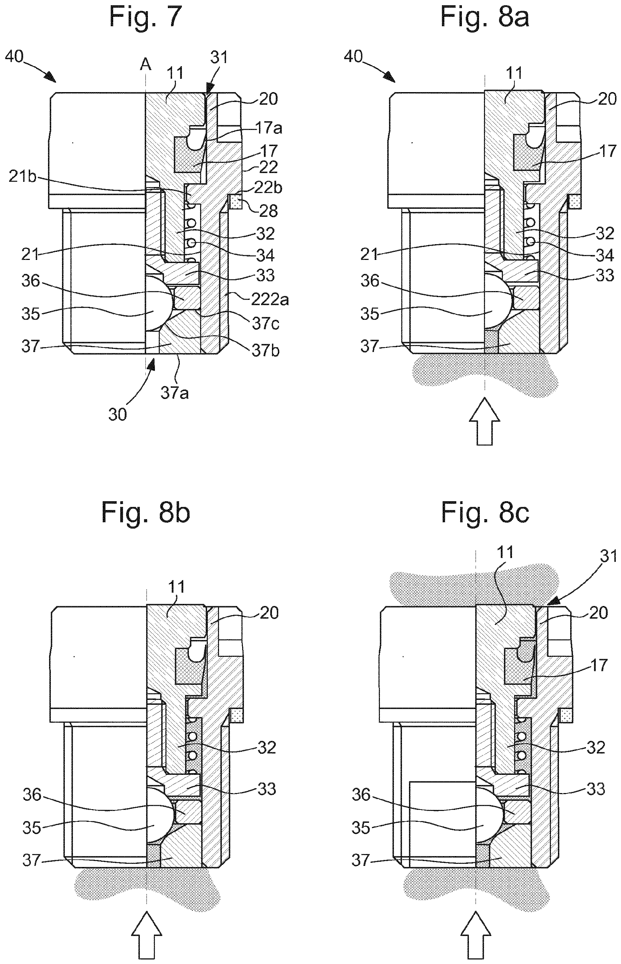

Une soupape de sécurité automatique 40 notamment pour montre de plongée selon une autre forme de réalisation va maintenant être décrite en référence aux figures 7 à 8c.

Selon la figure 7, la soupape de sécurité automatique 40 comporte une tête de soupape 11 et un tube 20 solidaire de la tête de la soupape et comportant sur sa paroi externe 22 une partie filetée 222a afin que le tube 20 puisse être vissé dans la carrure en particulier d'une montre de plongée. A l'instar de la soupape intégrée à la tête couronne, la soupape automatique 40 comporte un canal d'évacuation agencé pour pouvoir être en communication fluidique avec l'intérieur du boitier de montre lorsque la soupape de sécurité est dans une configuration ouverte afin d'évacuer un excès de fluide. La soupape de sécurité comporte en outre un régulateur de pression agencé à l'intérieur du canal d'évacuation pour maitriser la vitesse de sortie du fluide. Ce régulateur de pression est du type décrit dans les deux premières formes de réalisation comportant également une bille 35 et son siège 37 monté à l'entrée 30 du canal d'évacuation. La tête de la soupape 11 repose sur un épaulement 21b situé sur la circonférence de la paroi interne 21 du tube 20. La tête 11 comporte une extension cylindrique 32 faisant office de piston. Le piston 32 s'étend le long d'un axe central A de la soupape 40 en direction de la bille 35. Dans cet exemple, le piston 32 comporte un taraudage dans lequel est vissée une vis de guidage 33. La forme de l'ensemble piston-vis de guidage peut être selon une variante d'un seul tenant.

Un ressort 34 est compressé axialement entre la tête de soupape 11 et une partie périphérique de la vis de guidage 33. Tout comme la première forme de réalisation, le siège 37 de la soupape de sécurité comporte une base annulaire 37a comportant une ouverture dont l'axe de révolution coïncide avec l'axe central A de la soupape. Cette ouverture correspond à l'entrée 30 du canal d'évacuation de la soupape. Le siège 37 comporte également une surface d'appui 37b inclinée et circulaire destinée à être en contact avec la bille 35 ainsi qu'une surface d'appui périphérique 37c. Une bague de maintien 36 comprenant une paroi latérale externe en appui contre la circonférence de la paroi interne 21 du tube 20 repose sur la surface d'appui périphérique 37c du siège 37 afin d'encercler la bille 35 pour en assurer le centrage par rapport à l'axe central A de la soupape 40.

La tête de soupape 11 comporte un joint d'étanchéité à lèvre 17a. Cette lèvre d'étanchéité 17a est en appui contre la paroi interne 21 du tube 20 lorsque la pression en aval de la bille 35 est inférieure à une valeur prédéterminée. La lèvre d'étanchéité est configurée pour fléchir dans une direction essentiellement perpendiculaire à la paroi interne 21 du tube 20 lorsque la pression en aval de la bille 35 excède la valeur prédéterminée afin de permettre l'évacuation du fluide hors de la soupape.

La soupape 40 comporte en outre un épaulement 22b sur la circonférence de la paroi externe 22 du tube 20 présentant une surface d'appui contre laquelle une bague d'étanchéité 28 est collée.

La configuration de la soupape selon l'une quelconque des formes de réalisation qui viennent d'être décrites présente de nombreux avantages, notamment la possibilité d'ajuster la vitesse du fluide à la sortie de canal d'évacuation, par un choix approprié du ressort de compression, afin de limiter les variations de la pression d'ouverture qui s'exerce sur les joints lors de la remontée du plongeur. Le joint d'étanchéité (torique pour la soupape intégrée à la tête couronne, à lèvre pour la soupape de sécurité automatique) est par conséquent moins sollicité, ce qui permet de s'affranchir des problèmes liés au collage du joint. Par ailleurs, la pression à l'intérieur du boitier de montre est régulée de manière optimale, ce qui permet d'éviter une dégradation des différents composants horlogers qui pourrait être occasionnée par de trop grandes variations de pression. En outre, l'utilisation d'un ressort de compression pour la régulation de la pression permet de supprimer les problèmes liés à la tolérance des pièces.

Naturellement, l'invention n'est pas limitée aux modes de réalisation décrits en référence aux figures et des variantes pourraient être envisagées sans sortir du cadre de l'invention. Par exemple, l'extrémité du piston agissant sur la bille peut revêtir d'autres formes aptes à limiter le déplacement axial de la bille lorsque que la soupape est dans une configuration ouverte. Le piston peut en outre être d'un seul tenant ou être constitué de plusieurs pièces assemblées.

On pourrait également imaginer que le canon central et le capot forment un ensemble apte à être placé dans trois positions axiales par rapport au tube afin de pouvoir commander une ou plusieurs fonctions additionnelles. La soupape de sécurité selon cette variante d'exécution pourrait être opérationnelle par exemple dans deux des trois positions axiales.

### List de références utilisées

Tête couronne ***de réglage** 10*
   *Capot 11*
      *Couvercle 12*
      *Jupe axiale 13*
         *Epaulement 14*
         *Cavité 15*
         *Rainure 16*
      *Joint d'étanchéité 17*
         *Joint torique*
      *Bague de maintien 18*
   *Tube 20*
      *Paroi interne 21*
         *Partie taraudée 21a*
         *Epaulement 21b (1 mode de réalisation)*
            *Surface d'appui*
      *Paroi externe 22*
         *Renflement 22a*
   *Canon central 23*
      *Paroi interne 24*
      *Paroi externe 25*
         *Partie filetée 25a*
   *Bague de guidage 26(alternative)*
      *Surface d'appui 26a*
   *Soupape de sécurité*
      *Canal d'évacuation*
         *Entrée 30*
         *Sortie 31*
      *Régulateur de de pression*
         *Piston 32*
            *Epaulement 32a*
            *Extrémité évidée 32b en forme de cône*
            *Vis de guidage 33*
               *Tête de vis 33a*
               *Partie centrale évidée 33b*
               *Partie annulaire périphérique 33c*
         *Organe élastique 34*
            *Ressort hélicoïdal*
         *Bille 35*
         *Bague de maintien 36*
         *Siège de bille 37*
            *Base annulaire 37a*
            *Surface d'appui inclinée 37b*
            *Surface d'appui périphérique 37c*
            *Paroi cylindrique 37d*
***Soupape de sécurité automatique** 40*
   *Tête de soupape 11*
      *Joint d'étanchéité 17*
      *Joint d'étanchéité à lèvre 17a*
   *Tube 20*
      *Paroi interne 21*
         *Epaulement 21b*
      *Paroi externe 22*
         *Partie filetée 222a*
         *Epaulement 22b*
            *Surface d'appui*
      *Bague d'étanchéité 28*
   *Canal d'évacuation*
      *Entrée 30*
      *Sortie 31*
   *Régulateur de de pression*
      *Piston 32*
         *Vis de guidage 33*
      *Organe élastique 34*
         *Ressort hélicoïdal*
      *Bille 35*
      *Bague de maintien 36*
      *Siège de bille 37*
         *Base annulaire 37a*
         *Surface d'appui inclinée 37b*
         *Surface d'appui périphérique 37c*

## Revendications

1. Tête couronne (10) pour pièce d'horlogerie, notamment pour montre de plongée, comportant un capot (11) comprenant un couvercle (12) et une jupe axiale (13), un tube (20) destiné à être fixé dans un boitier de la pièce d'horlogerie, un joint d'étanchéité (17) disposé entre le tube (20) et la jupe axiale (13), et un canon central (23) agencé pour être en prise avec le tube (20), le canon central (23) et le capot (11) formant un ensemble apte à être placé dans différentes positions axiales par rapport au tube (20), la tête couronne (10) comprenant en outre une soupape de sécurité comportant un canal d'évacuation agencé pour pouvoir être en communication fluidique avec l'intérieur du boitier lorsque la soupape est dans une configuration ouverte afin d'évacuer un excès de fluide, la soupape de sécurité comportant par ailleurs un régulateur de pression agencé à l'intérieur du canal d'évacuation pour maitriser la vitesse de sortie du fluide, **caractérisée en ce que** le régulateur de pression comporte une bille (35) agencée pour coopérer avec un siège de bille (37), la bille étant agencée sur le siège de bille de manière à obstruer le passage d'un fluide dans le canal d'évacuation lorsque la pression interne en amont de la bille est inférieure à une valeur prédéterminée, la bille (35) étant délogée du siège (37) lorsque ladite pression interne excède la valeur prédéterminée afin d'établir ladite communication fluidique.

2. Tête couronne selon la revendication 1, **caractérisée en ce que** le siège de bille (35), le tube (20) et la jupe axiale (13) présentent une symétrie de révolution par rapport à l'axe de rotation (A) du capot (11), le siège (35) comportant une ouverture centrale (30) correspondant à l'entrée du canal d'évacuation ainsi qu'une surface d'appui (37b) destinée à être en contact avec la bille (35).

3. Tête couronne selon la revendication 1 ou 2, **caractérisée en ce que** le régulateur de pression comporte en outre un piston (32) monté à l'intérieur du canon central (23) et un organe élastique (34) agencé pour coopérer avec le piston (32), lequel est configuré pour se déplacer axialement au gré des variations de pression à l'intérieur du boîtier.

4. Tête couronne selon la revendication 3, **caractérisée en ce que** le piston (32) et l'organe élastique (34) forment un ensemble agencé d'une part pour pouvoir actionner le déplacement d'une tige de commande, et d'autre part, pour la régulation de la pression à l'intérieur du boitier.

5. Tête couronne selon l'une quelconque des revendications précédente, comportant en outre des moyens de blocage (21b; 26) empêchant la désolidarisation entre le capot (11) et le tube (20).

6. Tête couronne selon la revendication 5, **caractérisée en ce que** les moyens de blocage sont sous la forme d'une bague de guidage (26) agencée à une extrémité du tube (20) au moins partiellement sur sa circonférence, la bague de guidage comportant une surface d'appui (26a) agencée pour venir exercer une pression sur le joint d'étanchéité (17).

7. Tête couronne selon la revendication 5, **caractérisée en ce que** les moyens de blocage sont sous la forme d'un épaulement (21b) agencé sur la paroi interne (21) du tube (20) et comportant une surface d'appui contre laquelle une partie du piston (32) peut venir en butée et sous la forme d'un rebord (23a) prévu à la base du canon central (23) et agencé pour venir en butée contre un épaulement (32a) prévu sur le piston (32).

8. Pièce d'horlogerie, notamment montre de plongée, comportant la tête couronne de réglage selon l'une quelconque des revendications 1 à 7.

## Patentansprüche

1. Kronenkopf (10) für Uhren, insbesondere für Taucheruhren, umfassend eine Kappe (11) mit einem Abschlussdeckel (12) und einem axialen Rand (13), eine Hülse (20) zur Befestigung in einem Gehäuse der Uhr, eine zwischen der Hülse (20) und dem axialen Rand (13) angeordnete Dichtung (17), und eine zentrale Buchse (23), die für den Eingriff mit der Hülse (20), der zentralen Buchse (23) und der Kappe (11) angeordnet ist, die eine Einheit bilden, die in verschiedenen axialen Positionen in Bezug auf die Hülse (20) positionierbar ist, wobei der Kronenkopf (10) ferner ein Sicherheitsventil mit einem Ablasskanal umfasst, der angeordnet ist für eine Fluidverbindung mit dem Inneren des Gehäuses, wenn sich das Ventil in einer offenen Konfiguration befindet, um überschüssige Flüssigkeit abzulassen, wobei das Sicherheitsventil ferner einen innerhalb des Ablasskanals angeordneten Druckregler umfasst, um die Abflussgeschwindigkeit der Flüssigkeit zu steuern, **dadurch gekennzeichnet, dass** der Druckregler eine Kugel (35) umfasst, die so angeordnet ist, dass sie mit einem Kugelsitz (37) zusammenwirkt, wobei die Kugel auf dem Kugelsitz angeordnet ist, um den Durchfluss einer Flüssigkeit in dem Ablasskanal zu versperren, wenn der Innendruck stromaufwärts der Kugel unter einem vorbestimmten Wert liegt, und wobei die Kugel (35) aus dem Sitz (37) entfernt wird, wenn der Innendruck den vorbestimmten Wert überschreitet, um die Fluidverbindung herzustellen.

2. Kronenkopf nach Anspruch 1, **dadurch gekennzeichnet, dass** der Kugelsitz (35), die Hülse (20) und der axiale Rand (13) eine Drehsymmetrie in Bezug auf die Drehachse (A) der Kappe (11) aufweisen, wobei der Sitz (35) eine dem Eingang des Ablasskanals entsprechende zentrale Öffnung (30) sowie eine Stützfläche (37b) für den Kontakt mit der Kugel (35) umfasst.

3. Kronenkopf nach Anspruch 1 oder 2, **dadurch gekennzeichnet, dass** der Druckregler ferner einen im Inneren der zentrale Buchse (23) montierten Kolben (32) und ein elastisches Element (34) umfasst, das so angeordnet ist, dass es mit dem Kolben (32) zusammenwirkt, der so konfiguriert ist, dass er sich in Abhängigkeit von den Druckschwankungen im Inneren des Gehäuses axial bewegt.

4. Kronenkopf nach Anspruch 3, **dadurch gekennzeichnet, dass** der Kolben (32) und das elastische Element (34) eine Einheit bilden, die dazu vorgesehen ist, einerseits die Bewegung einer Steuerstange zu aktivieren, und andererseits den Druck im Inneren des Gehäuses zu regeln.

5. Kronenkopf nach einem der vorhergehenden Ansprüche, ferner umfassend Verriegelungsmittel (21b; 26), die die Abtrennung der Kappe (11) von der Hülse (20) verhindern.

6. Kronenkopf nach Anspruch 5, **dadurch gekennzeichnet, dass** die Verriegelungsmittel die Form eines Führungsrings (26) aufweisen, der an einem Ende der Hülse (20) zumindest teilweise auf dessen Umfang angeordnet ist, wobei der Führungsring eine Stützfläche (26a) aufweist, die dazu vorgesehen ist, auf die Dichtung (17) einen Druck auszuüben.

7. Kronenkopf nach Anspruch 5, **dadurch gekennzeichnet, dass** die Verriegelungsmittel die Form eines auf der Innenwand (21) der Hülse (20) angeordneten Schulterstücks (21b) aufweisen, das eine Stützfläche aufweist, gegen die ein Teil des Kolbens (32) in Anschlag gelangen kann, und die Form eines an der Basis der zentralen Buchse (23) vorgesehenen Rands (23a) aufweisen, der so angeordnet ist, dass er gegen ein auf dem Kolben (32) vorgesehenes Schulterstück (32a) in Anschlag gelangt.

8. Uhr, insbesondere Taucheruhr, umfassend den Regulierungs-Kronenkopf nach einem der Ansprüche 1 bis 7.

## Claims

1. A crown head (10) for a timepiece, especially for diving watches, comprising a cap (11) having a cover (12) and an axial skirt (13), a tube (20) designed to be secured in a case of the timepiece, a sealing gasket (17) arranged between the tube (20) and the axial skirt (13), and a central pipe (23) designed to be engaged with the tube (20), the central pipe (23) and the cap (11) forming an assembly able to be placed in different axial positions with respect to the tube (20), the crown head (10) further comprising a safety valve having an evacuation channel designed to be in fluidic communication with the inside of the case when the valve is in an open configuration so as to evacuate an excess of fluid, the safety valve moreover comprising a pressure regulator arranged inside the evacuation channel to control the outlet speed of the fluid, **characterized in that** the pressure regulator comprises a ball (35) arranged to cooperate with a ball seat (37), the ball being arranged on the ball seat so as to obstruct the passage of a fluid in the evacuation channel when the internal pressure upstream from the ball is less than a predetermined value, the ball (35) being dislodged from the ball seat (37) when said internal pressure exceeds the predetermined value in order to establish said fluidic communication.

2. The crown head as claimed in claim 1, **characterized in that** the ball seat (37), the tube (20) and the axial skirt (13) have a symmetry of revolution with respect to the axis of rotation (A) of the cap (11), the ball seat (37) having a central opening (30) corresponding to the inlet of the evacuation channel as well as a bearing surface (37b) designed to be in contact with the ball (35).

3. The crown head as claimed in claim 1 or 2, **characterized in that** the pressure regulator further comprises a piston (32) mounted inside the central pipe (23) and an elastic member (34) designed to cooperate with the piston (32), which is configured to move axially in accordance with pressure variations inside the case.

4. The crown head as claimed in claim 3, **characterized in that** the piston (32) and the elastic member (34) form an assembly designed on the one hand to actuate the displacement of a control rod, and on the other hand to regulate the pressure inside the case.

5. The crown head as claimed in any one of the preceding claims, further comprising locking means (21b; 26) preventing the cap (11) and the tube (20) from being taken apart.

6. The crown head as claimed in claim 5, **characterized in that** the locking means are in the form of a guide ring (26) arranged at one end of the tube (20) at least partly on its circumference, the guide ring having a bearing surface (26a) designed to exert a pressure on the sealing gasket (17).

7. The crown head as claimed in claim 5, **characterized in that** the locking means are in the form of a shoulder (21b) arranged on the internal wall (21) of the tube (20) and comprising a bearing surface against which a portion of the piston (32) can abut and in the form of a flange (23a) provided at the base of the central pipe (23) and designed to abut against a shoulder (32a) provided on the piston (32).

8. A timepiece, especially a diving watch, comprising the regulating crown head as claimed in any one of claims 1 to 7.
